Europäisches Patentamt

European Patent Office

Office européen des brevets

(11) Publication number: **0 089 928**
B1

# EUROPEAN PATENT SPECIFICATION

(45) Date of publication of the patent specification:
11.09.85

(51) Int. Cl.⁴: **F 02 N 11/00,** H 02 K 7/10, H 02 K 23/68

(21) Application number: 83830026.7

(22) Date of filing: 08.02.83

(54) Electromagnetic engagement device for internal combustion engine starter motors.

(30) Priority: 18.03.82 IT 6734982

(43) Date of publication of application:
28.09.83 Bulletin 83/39

(45) Publication of the grant of the patent:
11.09.85 Bulletin 85/37

(84) Designated Contracting States:
DE FR GB SE

(56) References cited:
FR - A - 815 879
FR - A - 1 185 110
GB - A - 1 157 272
US - A - 4 156 817

(73) Proprietor: FIAT AUTO S.p.A., Corso Giovanni
Agnelli 200, I-10135 Torino (IT)

(72) Inventor: Berta, Secondo, Via Valgrana 2, I-10090 Reano
(Torino) (IT)

(74) Representative: Bosotti, Luciano et al, c/o
Jacobacci-Casetta & Perani S.p.A. Via Alfieri, 17,
I-10121 Torino (IT)

## Description

The present invention relates to engagement devices for internal combustion engine starter motors. More specifically, the present invention relates to a device in which a pinion which is rotatable by the starter motor is axially slidable with respect to the shaft of the starter motor, said device including:

— at least one ferromagnetic mass associated with the rotor of the starter motor and axially movable with respect to the rotor itself in dependence on a magnetic field intensity; the said ferromagnetic mass being provided with mechanical connection means for connection to the pinion such that the masses and the pinion cooperate together and are axially movable with respect to the shaft of the starter motor between a general rest position and a general starting position, in which the pinion engages the toothed rim of the flywheel of the internal combustion engine,
— supply means intended to selectively produce a magnetic field intensity such that the ferromagnetic masses and the pinion are moved to the said starting position, and
— biasing means biasing the ferromagnetic masses and the pinion towards the said rest position.

A similar device is known, for instance, from US-A-4 156 817, wherein a pinion assembly is shown which can be displaced towards a starting position to engage the ring gear of an internal combustion engine under magnetic force exerted by a pair of electromagnet poles. The poles are bolted to the casing of the motor and have respective arcuate shoes saurrounding an armature which is mounted on the shaft and controls axial displacement of the pinion assembly.

According to the present invention, an engagement device of the type set forth above is provided characterised by the fact that said ferromagnetic masses are principally located within the rotor of the starter motor and are moved in dependence on the magnetic field intensity present therein.

Thanks to this characteristic, a particularly robust and reliable electromagnetically operable engagement device is obtained having a compact structure. Mounting of the ferromagnetic masses controlling displacement of the pinion in the rotor of the starter motor can be rapidly and precisely effected substantially reducing the risks of malfunctioning.

In a preferred embodiment of the invention, the device according to the invention includes switching means sensitive to the axial position of the pinion and which controls the rotation of the pinion by the starter motor when the pinion itself reaches the starting position.

Thanks to this further characteristic, the device according to the invention permits a starter motor for internal combustion engines to be obtained, in which the pinion is drawn into rotation by the starter motor only when it has reached the end of its axial stroke to mesh with the toothed rim of the flywheel of the internal combustion engine.

The invention will now be described, purely by way of non-limitative example, with reference to the attached drawings, in which:

Figure 1 is an axial sectional view of a starter motor for an internal combustion engine, including a device according to the invention, illustrated in a first operating position, and

Figure 2 ist a view corresponding to the lower left part of Figure 1, which illustrates the device according to the invention in another operating position.

In the drawings, reference numeral 1 generally indicates the casing of a starter motor for internal combustion engines, including a stator yoke 2 which supports an excitation winding 3 and a rotor 4 which provides rotary drive for a central shaft 5 supported at its ends in the casing 1.

A pinion 6, intended to mesh with the toothed rim of the flywheel (not illustrated) of an internal combustion engine with which the starter motor is associated, is slidable axially on the shaft 5.

The pinion 6 is connected to the shaft 5 with the interposition of a coupling element 7 having a cylindrical body 7a and an enlarged head 7b. The element 7 provides, in a manner which is widely known in the art, for the transmission of torque between the shaft 5 and the pinion 6 in only one direction to prevent the internal combustion engine from driving the starter motor once once the internal combustion engine has started.

The rotor 4, which is made of ferromagnetic material, has cylindrical cavities 8 orientated in an axial direction with respect to the rotor 4 itself, that is to say, in a direction parallel to the shaft 5.

Within the cavities 8, which open onto the end face of the rotor 4 opposite the pinion 6, there are axially slidable two masses 9 of ferromagnetic material, each of which surrounds one end of a respective rod 10 which extends beyond the other end face of the rotor 4 and abuts at its opposite end against a thrust ring 11.

This thrust ring 11 is axially slidable on the cylindrical body 7a of the coupling element 7 and is intended to make the ferromagnetic masses 9 and the pinions 6 cooperate as far as axial movement with respect to the shaft 5 is concerned.

For this purpose, a helical spring 12 surrounds the said body 7a of the element 7, abutting at one end against the thrust ring 11 and at the other end against the enlarged head 7b of the element 7.

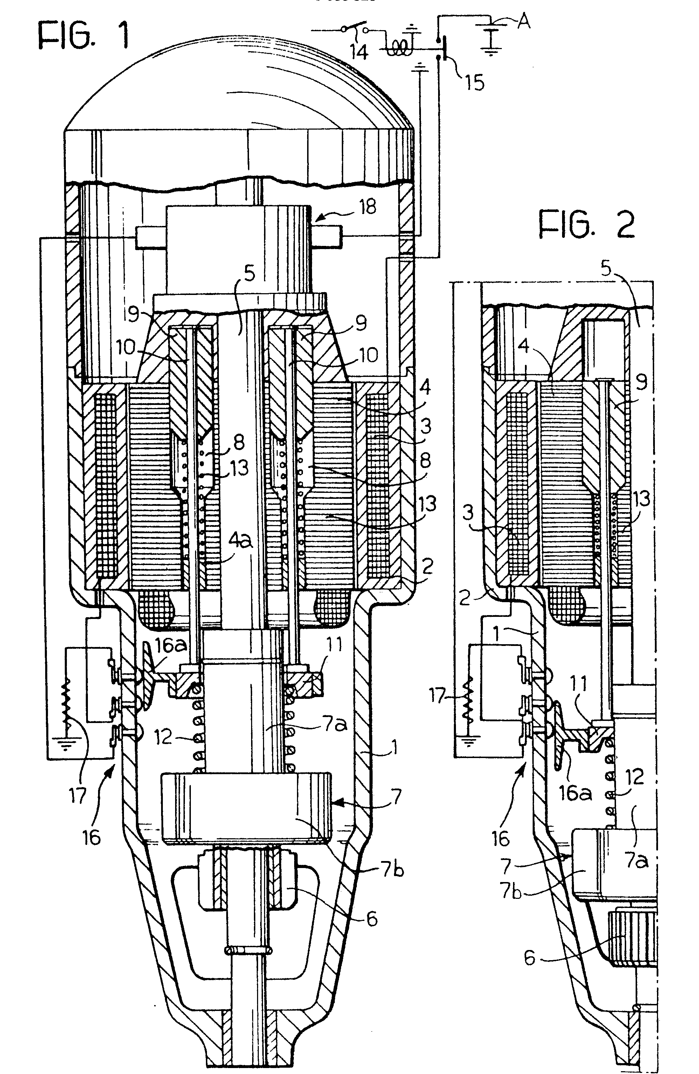

The arrangement is such that the ferromagnetic masses 9 and the pinion 6 cooperate axially in their translational movement with respect to the shaft 5 between a general rest position (Figure 1), in which the masses 9 project out from the rotor 4 and the pinion 6 is disengaged from the toothed ring of the flywheel of the internal combustion engine, and a general starting position (Figure 2), in which the ferromagnetic masses 9 are completely drawn into the cavities 8 and the pinion 6 meshes with the toothed rim of the flywheel of the internal combustion engine.

The presence of the spring 12 is intended to provide a resilient axial connection between the masses 9 and the pinion 6, so as to allow engagement even in the case in which the teeth of the pinion 6 would contact frontally against the teeth of the flywheel of the internal combustion engine. For the same purpose, the teeth of the pinion 6 are normally provided with a bevel formed on their front edge.

As can be seen in the drawings, around the portions of the rods 10 extending within the rotor 4 there are located helical springs 13 each of which abuts at one end against the corresponding ferromagnetic mass 9 and at the opposite end against a shoulder 4a formed in the holes within the rotor 4 itself in which the rods 10 slide.

The function of the springs 13 is to bias the ferromagnetic masses 9, and the pinion 6 axially cooperating with them, towards the general rest position of Figure 1.

The displacement of the masses 9 and the pinion 6 from the rest position of Figure 1 towards the starting position of Figure 2 is controllable by means of a switch 14 which causes closure of a contact 15 which connects one of the terminals of the induction winding 3 to a source A of electrical supply. The other terminal of the induction winding 3 is connected to the input terminal of a changeover switch 16 provided with a sliding contact 16a carried by the thrust ring 11. One of the output terminals of the changeover switch 16 is earthed through a resistor 17. The other output terminal of the changeover switch 16 is connected to the supply circuit, generally indicated 18, of the rotor winding 4.

When the pinion 6 is located in its rest position, the changeover switch 16 is located in a position illustrated in Figure 1. When the switch 14 is actuated and the contact 15 closes, the induction winding 3, which is connected in series with the resistor 17, generates within the rotor 4 a magnetic field intensity which has the effect of drawing the ferromagnetic masses 9 into the interior of the rotor 4 against the biasing forces exerted by the springs 13 (Figure 2).

In the rest position of Figure 1, in fact, the masses 9 project out from the rotor 4 and define air gaps within the rotor itself of approximately annular form which tend to become cancelled out as soon as there is a magnetic field within the rotor 4.

The movement of the masses 9 by the action of this magnetic field produces the axial displacement of the thrust ring 11 and the consequent displacement of the pinion 6 towards the starting position in which the teeth of the pinion 6 mesh with the fly wheel rim of the internal combustion engine. The axial displacement of the thrust ring 11 produces the displacement of the changeover switch 16 into the position illustrated in Figure 2. In this condition, both the induction winding 3 and the rotor winding are supplied with current. The rotor 4 starts to rotate within the stator yoke 2 driving the pinion 6 to rotate and therefore perform its function as starter member.

Once starting has taken place, the switch 14 is reopened bringing the contact 3 back to the position in which supply to the induction winding 3 is cut off. The starter motor is thus deactivated, and the springs 13 return the ferromagnetic masses 9 and the pinion 6 connected thereto into the general rest position illustrated in Figure 1.

## Claims

1. An engagement device for starter motors for internal combustion engines, in which a pinion (6) which is rotatable by the starter motor (2, 3, 4, 5) is axially slidable with respect to the shaft (5) of the starter motor, said engagement device including:

— at least one ferromagnetic mass (9) associated with the rotor (4) of the starter motor and axially movable with respect to the rotor (4) in dependence on a magnetic field intensity; the said ferromagnetic mass (9) being provided with mechanical connection means (7, 10, 11, 12) for connection to the pinion (6) such that the masses (9) and the pinion (6) cooperate together and are axially movable with respect to the shaft (5) of the starter motor between a general rest position and a general starting position in which the pinion (6) meshes with the toothed rim of the flywheel of the internal combustion engine,

— supply means (14, 15, 16, 17) intended to selectively produce a magnetic field intensity such that the ferromagnetic mass (9) and the pinion (6) are displaced to the said starting position, and

— biasing means (13) biasing the ferromagnetic mass (9) and the pinion (6) towards the said rest position, characterised by the fact that said ferromagnetic masses (9) are principally located within the rotor (4) of the starter motor and are moved in dependence on the magnetic field intensity present therein.

2. A device according to Claim 1, characterised by the fact that rotor (4) of the starter motor is provided with cylindrical cavities (8) orientated in an axial direction with respect to the rotor (4), and by the fact that the ferromagnetic masses (9) are in the form of inserts slidable within said cavities.

3. A device according to Claim 1 or Claim 2, characterised by the fact that the ferromagnetic masses (9) and the pinion (6) are connected by rods (10) which extend parallel to the shaft (5) of the starter motor.

4. A device according to Claim 1, characterised by the fact that it includes switching means (16) sensitive to the axial position of the pinion (6), which control the rotation of the pinion (6) by the starter motor when the pinion (6) reaches the starting position.

## Patentansprüche

1. Einspurvorrichtung für Anlassermotoren von Verbrennungskraftmaschinen mit innerer Verbrennung, bei der ein durch den Anlassermotor (2, 3, 4, 5) in Umdrehungen zu versetzendes Ritzel (6) bezüglich der Welle (5) des Anlassermotors verschiebbar ist,

— mit wenigstens einem dem Anker (4) des Anlassermotors zugeordneten und in Abhängigkeit von der Stärke eines magnetischen Feldes relativ zu dem Anker (4) verschiebbaren ferromagnetischen Körper (9), der zur Kupplung mit dem Ritzel (6) mit mechanischen Verbindungsmitteln (7, 10, 11, 12) versehen ist, derart, daß der Körper (9) und das Ritzel (6) zusammenwirken und bezüglich der Welle (5) des Anlassermotors zwischen einer Ruhestellung und einer Stellung zum Anlassen axial hin- und herschiebbar sind, in der das Ritzel (6) mit dem gezahnten Rand der Schwungscheibe der Verbrennungskraftmaschine mit innerer Verbrennung kämmt,
— mit einer Versorgungseinrichtung zur wahlweisen Erzeugung eines Magnetfeldes mit einer Stärke, bei der der ferromagnetische Körper (9) und das Ritzel in die Stellung zum Anlassen überführbar sind, sowie
— mit Vorspannmitteln (13), die den ferromagnetischen Körper (9) und das Ritzel (6) in Richtung auf die Ruhestellung vorspannen, dadurch gekennzeichnet, daß die ferromagnetischen Körper (9) hauptsächlich innerhalb des Ankers (4) des Anlassermotors angeordnet sind und in Abhängigkeit von der dort herrschenden magnetischen Feldstärke bewegt werden.

2. Einspurvorrichtung nach Anspruch 1, dadurch gekennzeichnet, daß der Anker (4) des Anlassermotors zylindrische Ausnehmungen (8) enthält, die bezüglich des Ankers (4) in Achsrichtung verlaufen, und daß die ferromagnetischen Körper (9) in Gestalt von Einsatzstücken in den Ausnehmungen verschiebbar sind.

3. Einspurvorrichtung nach Anspruch 1 oder 2, dadurch gekennzeichnet, daß die ferromagnetischen Körper (9) und das Ritzel (6) durch Stangen (10) miteinander verbunden sind, die parallel zu der Welle (5) des Anlassermotors verlaufen.

4. Einspurvorrichtung nach Anspruch 1, dadurch gekennzeichnet, daß sie Schaltmittel (16) enthält, die auf die Axialstellung des Ritzels (6) ansprechen und die Drehung des Ritzels (6) durch den Anlassermotor steuern, sobald das Ritzel (6) die Stellung zum Anlassen erreicht.

## Revendications

1. Dispositif d'engrènement pour démarreur pour moteurs à combustion interne, dans lequel un pignon (6) qui peut être entraîné par le moteur (2, 3, 4, 5) du démarreur peut coulisser axialement par rapport à l'arbre (5) du moteur du démarreur, ledit dispositif comprenant: au moins une masse ferromagnétiques (9) associée au rotor (4) du moteur du démarreur et pouvant se déplacer axialement par rapport au rotor (4) en fonction de l'intensité du champ magnétique; ladite masse ferromagnétiques (9) étant munie de moyens de liaison mécaniques (7, 10, 11, 12) destinés à la relier au pignon (6) de telle manière que les masses (9) et le pignon (6) coopèrent entre eux et puissent se déplacer axialement par rapport à l'arbre (5) du moteur du démarreur, entre une position générale de repos et une position générale de démarrage, dans laquelle le pignon (6) est en prise avec la couronne dentée du volant du moteur à combustion interne; des moyens d'alimentation (14, 15, 16, 17) destinés à produire sélectivement une intensité de champ magnétique telle que les masses ferromagnétiques (9) et le pignon (6) soient amenés à ladite position de démarrage, et des moyens de rappel (13) qui tendent à repousser lesdites masses ferromagnétiques (9) et le pignon (6) vers ladite position de repos, caractérisé par le fait que les masses ferromagnétiques sont logées en majeure partie à l'intérieur du rotor (4) du moteur du démarreur et sont mises en mouvement en fonction de l'intensité du champ magnétique présent dans ce rotor.

2. Dispositif selon la revendication 1, caractérisé par le fait que le rotor (4) du moteur de démarreur est muni de cavités cylindriques (8) orientées dans une direction axiale par rapport au rotor (4) et par le fait que les masses ferromagnétiques (9) sont réalisées sous la forme de noyaux qui peuvent coulisser dans lesdites cavités.

3. Dispositif selon la revendication 1 ou 2, caractérisé par le fait que les masses ferromagnétiques (9) et le pignon (6) sont reliés par des tiges (10) qui s'étendent parallèlement à l'arbre (5) du moteur du démarreur.

4. Dispositif selon la revendication 1, caractérisé par le fait qu'il comprend des moyens de commutation (16) sensibles à la position axiale du pignon (6) et qui commandent l'entraînement du pignon (6) en rotation par le moteur du démarreur lorsque le pignon (6) atteint la position de démarrage.

# FIG. 1

# FIG. 2